# EUROPEAN PATENT SPECIFICATION

(11) **EP 4 092 392 B1**
(45) Date of publication and mention of the grant of the patent: **02.04.2025**
(21) Application number: 21208968.4
(22) Date of filing: 18.11.2021
(51) Int. Cl.: G01F 1/60, G01F 25/10

(54) **ELECTROMAGNETIC WATER METER CONVERTER AND METHOD FOR CALIBRATING ELECTROMAGNETIC WATER METER CONVERTER**
ELEKTROMAGNETISCHER WASSERZÄHLERWANDLER UND VERFAHREN ZUR EICHUNG EINES ELEKTROMAGNETISCHEN WASSERZÄHLERWANDLERS
CONVERTISSEUR DE COMPTEUR D'EAU ÉLECTROMAGNÉTIQUE ET PROCÉDÉ D'ÉTALONNAGE D'UN CONVERTISSEUR DE COMPTEUR D'EAU ÉLECTROMAGNÉTIQUE

(30) Priority: 21.05.2021 CN 202110559993
(43) Date of publication of application: 23.11.2022
(73) Proprietor: NINGBO WATER METER (GROUP) CO., LTD., Ningbo City Zhejiang Province (CN)
(72) Inventor: MENG, Yiqing, Ningbo City, Zhejiang Province (CN); CHEN, Wei, Ningbo City, Zhejiang Province (CN)
(74) Representative: Viering, Jentschura & Partner mbB Patent- und Rechtsanwälte

(56) References cited:
- CN-A- 101 216 339
- US-A1- 2006 095 217
- US-A1- 2009 071 264

## Description

### TECHNICAL FIELD

This application relates to the field of electromagnetic flow measurement technologies, and in particular, to an electromagnetic water meter converter and a method for calibrating the electromagnetic water meter converter.

### BACKGROUND

With the improvement of people's living standards, electromagnetic water meters have been widely used. The electromagnetic water meters have requirements for low power consumption, and therefore, the coil excitation current is much smaller than the conventional electromagnetic flowmeters. The induced voltage signals are commonly only in millivolt to microvolt level, and especially in small flow measurement, the signal-to-noise ratio decreases. Moreover, the induced voltage signals are extremely weak, and therefore, to improve a common-mode rejection ratio, the amplification gain of the measurement circuit is generally 50 to 100 times. The amplification gain of some products in the market may even reach about 1000 times. After ADC sampling, an amplified induced voltage value needs to be divided by the amplification gain to reduce the raw induced potential difference at two ends of an electrode, and then an average flow rate in the tube can be reconstructed by using the raw induced potential difference.

However, in mass production, the selected identical components always have tolerances, and the quality of final products is uneven, which increase the production loss. To ensure the consistency of the produced converters and reduce the production loss, two calibration methods are commonly adopted. The first method is real flow calibration, and the obtained correction parameter k is an integration of a sensor (primary instrument) and a converter (secondary instrument). The second method is separation calibration, in which a converter obtains a coefficient k1 through a standard
signal generator, and then obtains another correction coefficient k2 by combining the coefficient k1 with that of the sensor, and it can be seen that the efficiency is quite low. In addition, in the actual use process by users, parameters of components in the converter may shift with a change in the physical environment, and therefore the value of k1 is not same as the original value which is obtained in the industry. This may cause a significant influence on the accuracy of the calculated flow rate. For such types of problems, a conventional method is to return the primary instrument and the secondary instrument to the original factory or professional organization for real flow calibration, but such the method increases the cost of users and production loss. CN 101 216 339 A discloses a known electromagnetic water meter converter.

### SUMMARY

Embodiments of this application provide an electromagnetic water meter converter and a method for calibrating the electromagnetic water meter converter, intended to improve production efficiency and reduce production costs.

In a first aspect, the embodiments of this application provide an electromagnetic water meter converter, including:
- an excitation circuit, including a first analogue switch, configured to switch to a measurement mode or a self-calibration mode;
- a calibration circuit configured to measure induced voltage signals according to a plurality of preset flow rates;
- a measurement circuit configured to process each of the induced voltage signals corresponding to each of the preset flow rates and output a digital signal, the measurement circuit including a second analogue switch configured to switch the measurement mode or the self-calibration mode; and
- the main control module configured to control the first analogue switch and the second analogue switch to switch to the measurement mode or the self-calibration mode, and correct a correction coefficient according to the digital signals and a preset calibration algorithm; when the first analogue switch switches to the self-calibration mode, the excitation circuit is connected to the calibration circuit, and when the second analogue switch switches to the self-calibration mode, the calibration circuit is connected to the measurement circuit.

The calibration circuit includes a precision instrument operation amplifier, a sampling resistor connected to an input end of the precision instrument operation amplifier, an adjustable voltage divider connected to an output end of the precision instrument operation amplifier, and a low-pass filter connected to the adjustable voltage divider.

The precision instrument operation amplifier is configured to acquire and amplify a voltage between two ends of the sampling resistor and output an amplified voltage signal.

The adjustable voltage divider is configured to divide the amplified voltage signal according to the plurality of preset flow rates and output voltage-divided voltage signal.

The low-pass filter is configured to filter out the high-frequency signal from the voltage-divided voltage signals to obtain the induced voltage signals.

In some embodiments, the calibration circuit further includes a first inductor and a second inductor, and when the first analogue switch switches to the self-calibration mode, the excitation circuit, the first inductor, the sampling resistor, and the second inductor form a closed loop.

In some embodiments, the adjustable voltage divider is a digitally adjustable resistor or a digital-to-analogue conversion chip.

In some embodiments, the adjustable voltage divider includes a micro control unit, a plurality of third analogue switches, and a network of precision voltage dividing resistors, where the micro control unit is configured to control any of the third analogue switches to close, to connect a corresponding voltage dividing resistor to the circuit.

In some embodiments, the low-pass filter includes a first resistor and a first capacitor, a first end of the first resistor is connected to the adjustable voltage divider, and a second end of the first resistor is connected to the ground via the first capacitor.

In some embodiments, the excitation circuit includes a constant current source, a switching bridge, coils, and a sensor tube section of an electromagnetic water meter.

The constant current source is configured to output the excitation current.

A controlled port of the switch bridge is connected to the main control module, the switch bridge is configured to change a direction of the excitation current based on the switching control instruction of the main control module, and when being conducted, the constant current source, the switch bridge, the coil, and the ground form an excitation loop.

The sensor tube section of the electromagnetic water meter is configured to acquire the inductive electrical potential.

In some embodiments, the measurement circuit further includes:
an instrument operation amplifier, connected to the second analogue switch and configured to amplify the induced voltage signals and output amplified induced voltage signals;
a signal modulation circuit, connected to the instrument operation amplifier and configured to perform signal modulation processing on the amplified induced voltage signals and output modulated induced voltage signals;
a band-pass filter, connected to the signal modulation circuit and configured to sample the modulated induced voltage signals and output induced voltage signal in a specific band; and
an analogue-to-digital converter, connected to the band-pass filter and configured to perform analogue-to-digital conversion processing on the induced voltage signals in the specific band and output the digital signals.

In some embodiments, the main control module includes a main control chip and a trigger control module, the main control chip being connected to the trigger control module.

The trigger control module is configured to control sending of a trigger signal.

The main control chip is configured to when the trigger signal is received, control the first analogue switch and the second analogue switch to switch to the measurement mode or the self-calibration mode and correct the correction coefficient according to the digital signals and the preset calibration algorithm.

In the second aspect, the embodiments of this application provide a method for calibrating the electromagnetic water meter converter according to the present invention, including:
controlling, by the main control module, the first analogue switch to switch from the measurement mode to the self-calibration mode to connect the excitation circuit to the calibration circuit;
controlling, by the main control module, the second analogue switch to switch from the measurement mode to the self-calibration mode to connect the calibration circuit to the measurement circuit;
measuring, by the calibration circuit, induced voltage signals according to a plurality of preset flow rates;
processing, by the measurement circuit, each of the induced voltage signals corresponding to each of the preset flow rates and outputting a digital signal; and
correcting, by the main control module, a correction coefficient according to the digital signals and a preset calibration algorithm.

Compared with related technologies, in the electromagnetic water meter converter provided by the embodiments of this application, the main control module may control the first analogue switch and the second analogue switch to switch to the measurement mode or the self-calibration mode, the main control module may automatically control the first analogue switch to switch from the measurement mode to the self-calibration mode so as to connect the excitation circuit to the calibration circuit, the main control module may automatically control the second analogue switch to switch from the measurement mode to the self-calibration mode so as to connect the calibration circuit to the measurement circuit, the calibration circuit measures induced voltage signals according to a plurality of preset flow rates, the measurement circuit processes each of the induced voltage signals corresponding to each of the preset flow rates and outputs a digital signal, and the main control module corrects a correction coefficient according to the digital signals and a preset calibration algorithm. Compared with a conventional electromagnetic water meter converter, which is calibrated by an external calibration device, in this application, by integrating the calibration circuit into the converter, calibration can be performed automatically without disassembling and assembling the whole meter or the electromagnetic water meter converter, and therefore the production cost and time cost are reduced and the calibration efficiency is improved. In addition, to facilitate mass production, self-calibration can alternatively be performed by an upper computer or other devices in the production of electromagnetic water meter converters for those skilled in the art. Compared with the method of calibrating one by one by an external calibration apparatus, the calibration efficiency is improved, and the production cost and time are reduced. In addition, the calibrated elements may not be changed or deviated due to a change in the environment, and therefore the consistency of products is improved, so that there is no need to return the electromagnetic water meter to the original factory or professional organization for real flow calibration, thereby reducing the time and energy cost of users while reducing the production loss.

### BRIEF DESCRIPTION OF THE ACCOMPANYING DRAWINGS

The drawings illustrated herein serve to provide a further understanding of and constitute a part of this application, and the illustrative embodiments of this application and the description thereof are used to explain this application and do not constitute an unduly limitation to this application. In the drawings:
FIG. 1 is a schematic diagram of functional modules of an electromagnetic water meter converter according to an embodiment of this application;
FIG. 2 is a schematic circuit diagram of an excitation circuit of an electromagnetic water meter converter according to an embodiment of this application;
FIG. 3 is a schematic circuit diagram of a measurement circuit of an electromagnetic water meter converter according to an embodiment of this application;
FIG. 4 is a schematic circuit diagram of a calibration circuit of an electromagnetic water meter converter according to an embodiment of this application;
FIG. 5 is another schematic circuit diagram of a calibration circuit of an electromagnetic water meter converter according to an embodiment of this application; and
FIG. 6 is a flowchart of a method for calibrating an electromagnetic water meter converter according to an embodiment of this application.

### DETAILED DESCRIPTION OF THE EMBODIMENTS

To make the objective, technical solution and advantages of this application clearer, this application is described and explained in combination with the accompanying drawings and embodiments. It should be understood that the specific embodiments described herein are intended to be explanatory only and are not intended to limit this application. Based on the embodiments provided herein, all other embodiments obtained by those of ordinary skill in the art without making creative efforts fall within the scope of protection of this application. In addition, it should be further understood that although the efforts made in the development process may be complicated and lengthy, to those of ordinary skill in the art related to the disclosed contents of this application, some changes in design, manufacture or production made based on the disclosed technical contents of this application are only conventional technical means, and should not be understood that the contents disclosed in this application are insufficient.

References to "embodiments" in this application mean that particular features, structures, or characteristics described in combination with the embodiments may be included in at least one embodiment of this application. The appearance of the phrase in various positions in the specification does not necessarily refer to the same embodiment nor is it a separate or alternative embodiment that is mutually exclusive to other embodiments. It is explicitly and implicitly understood by those of ordinary skill in the art that the embodiments described in this application may be combined with other embodiments in a case that there is no conflict.

Unless otherwise defined, technical or scientific terms referred to in this application shall have a general meaning to be understood by those of ordinary skill in the technical field to which this application pertains. The words "a/an", "one", "a type", "the" and the like as used in this application are not intended to be quantitative and may be used in the singular or plural. The terms "include", "comprise", "have" and any variations thereof are referred to in this application and are intended to cover a non-exclusive inclusion. For example, processes, methods, systems, products, or devices that include a series of steps or modules (units) are not limited to the listed steps or units, but may also include steps or units that are not listed or may further include other steps or units inherent to these processes, methods, products, or devices. The terms "connect", "interconnect", "couple", and the like referred to in this application are not limited to physical or mechanical connections, but may include electric connections, whether direct or indirect. "A plurality of" referred to in this application means greater than or equal to two. "And/or" describes the relationship of associated objects, indicating that there can be three relationships. For example, "A and/or B" may indicate that there are three situations: A exists alone, A and B exist at the same time, and B exists alone. The terms "first", "second", "third", and the like are used in this application only to distinguish similar objects and are not intended to represent a particular order of the objects.

With the rapid development of electronic technology and computing technology, the application of electromagnetic water meter converters is more and more extensive. When the electromagnetic water meter converter works in the measurement mode, the electromagnetic water meter converter mainly implements flow velocity measurement according to a one-to-one correspondence between an induced electromotive force generated by cutting magnetic field line motion of a conductor and a velocity of a measured fluid. However, in mass production, identical components selected always have tolerances. To ensure the consistency of the produced electromagnetic water meter converters, two calibration methods are commonly adopted. The first method is real flow calibration, and the obtained correction parameter k is an integration of a sensor (primary instrument) and an electromagnetic water meter converter (secondary instrument). The second method is separation calibration, in which an electromagnetic water meter converter obtains a coefficient k1 through a standard signal generator, and then obtains another correction coefficient k2 by combining the coefficient k1 with that of the sensor. In the actual use process by users, parameters of components in the electromagnetic water meter converter may shift with a change in the physical environment, and therefore the correction coefficient k1 when leaving the factory is no longer accurate, which may have a significant impact on the precision of a calculated flow rate. For such types of problems, a conventional method is to return the primary instrument and the secondary instrument to the original factory or professional organization for real flow calibration, but such the method increases the cost of users and production loss.

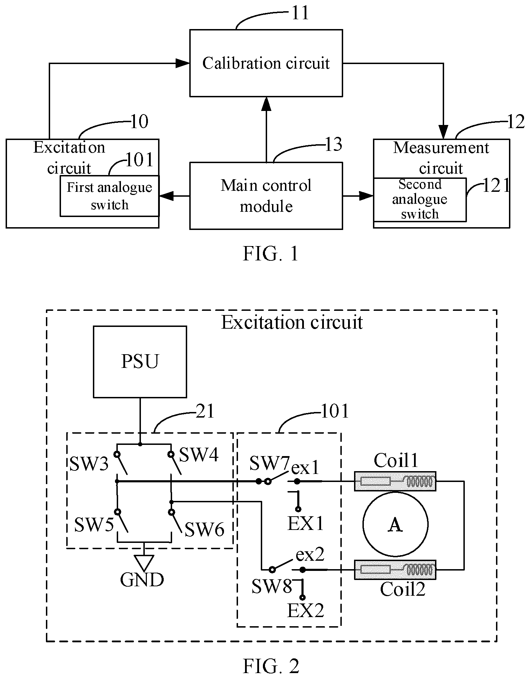

That is, the time cost and production loss are caused no matter whether the user adopts real flow calibration or recalibrates the converter by using a professional instrument on-site. To resolve the above technical problems, this application provides an electromagnetic water meter converter. FIG. 1 is a schematic diagram of functional modules of the electromagnetic water meter converter according to the embodiment of this application. As shown in FIG. 1, the electromagnetic water meter converter includes an excitation circuit 10, a calibration circuit 11, a measurement circuit 12, and the main control module 13.

The excitation circuit 10 includes a first analogue switch 101 configured to switch to a measurement mode or a self-calibration mode. FIG. 2 is a schematic circuit diagram of an excitation circuit in an electromagnetic water meter converter according to an embodiment of this application. As shown in FIG. 2, the first analogue switch 101 includes a first analogue switch SW7 and a first analogue switch SW8. In addition, excitation circuit 10 may be implemented by using an excitation chip including the first analogue switch 101 or by construction using other electronic components, which is not specifically limited herein.

The calibration circuit 11 is configured to measure induced voltage signals according to a plurality of preset flow rates. The calibration circuit 11 may be implemented by using a calibration chip or the like, which is not specifically limited herein. It should be noted that there may be a plurality of the preset flow rates, for example, there are three preset flow rates, and certainly, in some other embodiments, to improve the measurement accuracy, there may alternatively be four or more preset flow rates, which is specifically set according to the actual needs of the user, and is not specifically limited herein. In addition, the specific value of the preset flow rates is set according to the actual needs of the user and is not specifically limited herein.

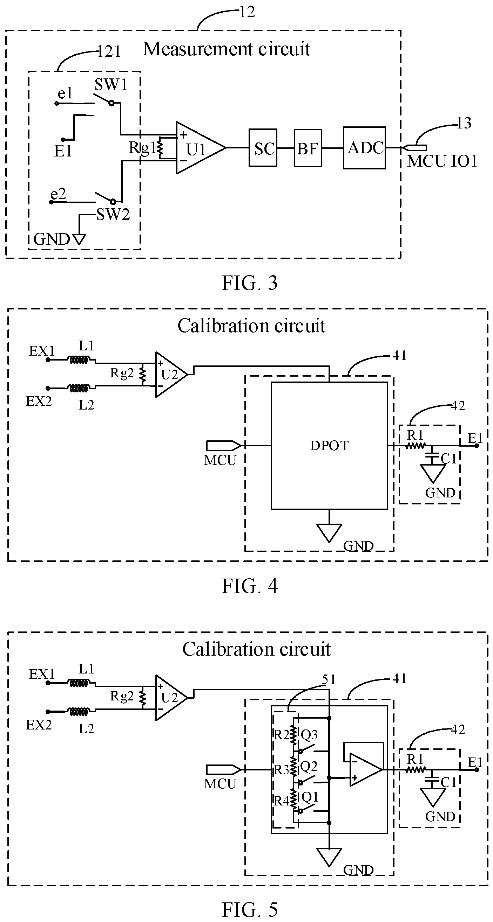

The measurement circuit 12 is configured to process each of the induced voltage signals corresponding to each of the preset flow rates and output a digital signal. The measurement circuit 12 includes a second analogue switch 121 configured to switch to a measurement mode or a self-calibration mode. The measurement circuit 12 may be implemented by using a measurement chip including the second analogue switch 121 or the like, which is not specifically limited herein. FIG. 3 is a schematic circuit diagram of a measurement circuit in an electromagnetic water meter converter according to an embodiment of this application. As shown in FIG. 3 the second analogue switch 121 includes a second analogue switch SW1 and a second analogue switch SW2. It should be noted that both the first analogue switch 101 and the second analogue switch 121 may be implemented by any or a combination of a MOS transistor, a triode, an IGBT, or an optocoupler.

The main control module 13 is configured to control the first analogue switch 101 and the second analogue switch 121 to switch to the measurement mode or the self-calibration mode, and correct a correction coefficient according to the digital signals and a preset calibration algorithm, where when the first analogue switch 101 switches to the self-calibration mode, the excitation circuit 10 is connected to the calibration circuit 11, and when the second analogue switch 121 switches to the self-calibration mode, the calibration circuit 11 is connected to the measurement circuit 12. In addition, the main control module 13 may alternatively control the first analogue switch 101 and the second analogue switch 121 to switch to the measurement mode, where when the first analogue switch 101 switches to the measurement mode, the excitation circuit 10 is disconnected from the calibration circuit 11 and the excitation circuit 10 works to acquire an induced electromotive force, and when the second analogue switch 121 switches to the measurement mode, the calibration circuit 11 is disconnected from the measurement circuit 12 and the measurement circuit 12 receives an induced electromotive force through an electrode to implement flow velocity measurement based on a one-to-one correspondence between the induced electromotive force and a velocity of a measured fluid.

It should be noted that the main control module 13 may be implemented by a microprocessor such as a single chip microcomputer, a digital signal processor (DSP), or a Field Programmable Gate Array (FPGA). In some other embodiments, the main control module 13 may alternatively be implemented by a programmable logic controller (PLC), which is not specifically limited herein. It is easy to understand that, those skilled in the art can integrate some hardware circuitry and software programs or algorithms into the main control module 13, so that the first analogue switch 101 and the second analogue switch 121 can be controlled to automatically switch to the measurement mode or the self-calibration mode without disassembling and assembling the whole meter or the electromagnetic water meter converter, and when the first analogue switch 101 and the second analogue switch 121 are controlled to switch to the self-calibration mode, the correction coefficient can further be corrected according to the digital signals and a preset calibration algorithm, to automatically complete the calibration process. Therefore, the production cost and time cost are reduced and the calibration efficiency is improved. In addition, to facilitate mass production, self-calibration can alternatively be performed by an upper computer or other devices in the production of electromagnetic water meter converters for those skilled in the art, thereby improving the production efficiency of the mass production. In addition, the consistency requirements on products can be implemented without calibrating the products one by one by using an external calibration apparatus, and further, the calibrated elements may not be changed or deviated due to a change in the environment, thereby improving the calibration efficiency and reducing the cost. It should be noted that the preset calibration algorithm is an algorithm designed by those skilled in the art in combination with a conventional calibration algorithm and an average value of a plurality of flow points, which is specifically set according to the needs of users and is not specifically limited herein.

In the technical solution of this embodiment, the first analogue switch 101 and the second analogue switch 121 can be controlled to switch to the measurement mode or the self-calibration mode by the main control module 13. When the first analogue switch 101 and the second analogue switch 121 are controlled to switch to the self-calibration mode, the main control module 13 controls the first analogue switch 101 to switch from the measurement mode to the self-calibration mode to connect the excitation circuit 10 to the calibration circuit 11 and controls the second analogue switch 121 to switch from the measurement mode to the self-calibration mode to connect the calibration circuit 11 to the measurement circuit 12. The calibration circuit 11 measures induced voltage signals according to a plurality of preset flow rates, the measurement circuit 12 processes each of the induced voltage signals corresponding to each of the preset flow rates and outputs a digital signal, and the main control module 13 corrects a correction coefficient according to the digital signals and a preset calibration algorithm. Compared with a conventional electromagnetic water meter converter, which is calibrated by an external calibration device, in this application, by integrating the calibration circuit into the converter, calibration can be performed automatically without disassembling and assembling the whole meter or the electromagnetic water meter converter, and therefore the production cost and time cost are reduced and the calibration efficiency is improved. In addition, to facilitate mass production, self-calibration can alternatively be performed by an upper computer or other devices in the production of electromagnetic water meter converters for those skilled in the art. Compared with the method of calibrating one by one by an external calibration apparatus, the calibration efficiency is improved, and the production cost and time are reduced. In addition, the calibrated elements may not be changed or deviated due to a change in the environment, therefore, the consistency of products is improved and there is no need to return to the original factory or professional organization for real flow calibration, thereby reducing the time and energy cost of users while reducing the production loss.

In some optional embodiments, FIG. 4 is a schematic circuit diagram of the calibration circuit 11 in the electromagnetic water meter converter according to an embodiment of this application. As shown in FIG. 4, in an optional embodiment, the calibration circuit 11 includes a precision instrument operation amplifier U2, a sampling resistor Rg2 connected to an input end of the precision instrument operation amplifier U2, an adjustable voltage divider 41 connected to an output end of the precision instrument operation amplifier U2, and a low-pass filter 42 connected to the adjustable voltage divider 41.

The precision instrument operation amplifier U2 is configured to acquire and amplify a voltage between two ends of the sampling resistor Rg2 and output an amplified voltage signal. The precision instrument operation amplifier U2 has a fixed built-in gain, and because the precision instrument operation amplifier U2 has a fixed built-in gain inside, compared with using an externally installed gain resistor, the use of components is reduced to reduce the overall volume, which is also beneficial to subsequent wiring and layout of a PCB board. In addition, because the fixed built-in gain changes with the influence of the environment, the adaptability of the circuit is improved. Certainly, in some other embodiments, to improve the accuracy and temperature drift, a separate externally installed gain resistor may also be set, which is specifically set according to the needs of users, and is not specifically limited herein. In addition, the specific model of the precision instrument operation amplifier U2 is not limited but is specifically set according to the needs of users.

The adjustable voltage divider 41 is configured to divide the amplified voltage signal according to the plurality of preset flow rates and output voltage-divided voltage signals. The adjustable voltage divider 41 may be implemented by an adjustable voltage dividing chip or the like, which is not specifically limited herein.

The low-pass filter 42 is configured to filter out a high-frequency signal from the voltage-divided voltage signals to obtain the induced voltage signals. The low-pass filter 42 may be implemented by using a low-pass filter chip or the like, which is not specifically limited herein.

In this embodiment of this application, a voltage between two ends of the sampling resistor Rg2 is acquired and amplified by the precision instrument operation amplifier U2, the amplified voltage signal is divided according to a plurality of preset flow rates by the adjustable voltage divider 41, and the voltage-divided voltage signals are outputted and from which a high-frequency signal is filtered out by the low-pass filter 42, to obtain induced voltage signals. To facilitate understanding, separate calibration is used as an example. By using a standard signal generator, an induced voltage Uref1, induced voltage Uref2, and induced voltage Uref3 corresponding to specified flow velocity Vref1, flow velocity Vref2 and flow velocity Vref3 are outputted to the electromagnetic water meter converter. The electromagnetic water meter converter obtains actually measured flow velocity Vm1, actually measured flow velocity Vm2, and actually measured flow velocity Vm3 by using the above-mentioned voltages (the induced voltage Uref1, induced voltage Uref2, and induced voltage Uref3), and then obtains a correction coefficient k1 by using a linear fitting method. The measured flow velocities can be obtained through a calculation using a formula Vc = k1 × Vm, where Vc is the calibrated flow velocity, k1 is the correction coefficient k1, and Vm is the measured flow velocity. It can be understood that, in this application, the calibration circuit 11 is adjusted automatically by the main control module 13, the amplified voltage signal is voltage-divided according to a plurality of preset flow rates (for example, a preset flow rate Q1, a preset flow rate Q2, and a preset flow rate Q3), to output the voltage-divided voltage signals, that is, an induced voltage U11, an induced voltage U12, and an induced voltage U13 corresponding to the preset flow rate Q1, the preset flow rate Q2, and the preset flow rate Q3 are respectively inputted to a port E1 of the measurement circuit 12, and similarly a new correction coefficient k2 is obtained by using a linear fitting method, of which the calculation method is similar to that of the separate calibration and can be implemented by those skilled in the art, which is therefore not repeated herein. The new correction coefficient k2 is accurate, the calculated flow velocity is accurate, thereby improving the calibration efficiency and reducing the production cost and time cost in mass production.

Referring to FIG. 4, in an embodiment, the calibration circuit 11 further includes a first inductor L1 and a second inductor L2, and when the first analogue switch 101 switches to the self-calibration mode, the excitation circuit 10, the first inductor L1, the sampling resistor Rg2, and the second inductor L2 form a closed loop.

Referring to FIG. 4, in an embodiment, the adjustable voltage divider 41 is a digital adjustable resistor DPOT or a digital-to-analogue conversion chip. The digital adjustable resistor DPOT is also referred to as a "digital potentiometer". Since the digital adjustable resistor DPOT is less affected by the temperature, the calculation result can be more accurate. Certainly, in other embodiments, the adjustable voltage divider 41 may alternatively be implemented by other electronic elements, which is not specifically limited herein.

FIG. 5 is another schematic circuit diagram of the calibration circuit of the electromagnetic water meter converter according to an embodiment of this application. As shown in FIG. 5, in an embodiment, the adjustable voltage divider 41 includes a micro control unit MCU, a plurality of third analogue switches (a third analogue switch Q1, a third analogue switch Q2, and a third analogue switch Q3), and a network of precision voltage dividing resistors 51, where the micro control unit MCU is configured to control any of the third analogue switches to close, to connect a corresponding voltage dividing resistor (a voltage dividing resistor R2, a voltage dividing resistor R3, or a voltage dividing resistor R4) to the circuit. It should be noted that, in this embodiment, to improve the durability of the product, the micro control unit MCU is implemented by an independent control chip. Certainly, in some embodiments, to reduce the overall volume, the micro control unit MCU may alternatively be implemented by using the main control module 13, which is specifically set according to the needs of users and is not specifically limited herein.

Referring to FIG. 4, in an embodiment, the low-pass filter 42 includes a first resistor R1 and a first capacitor C1, a first end of the first resistor R1 is connected to the adjustable voltage divider 41, and a second end of the first resistor R1 is connected to ground GND via the first capacitor C1.

Referring to FIG. 2, in some embodiments, the excitation circuit 10 further includes a constant current source PSU, a switching bridge 21, a coil, and a sensor tube section A of an electromagnetic water meter.

The constant current source PSU is configured to output an excitation current.

A controlled port of the switch bridge 21 is connected to the main control module 13, the switch bridge 21 is configured to change the direction of the excitation current based on a switching control instruction of the main control module 13, and when being conducted, the constant current source PSU, the switch bridge 21, the coil, and the ground GND form an excitation loop. The switching bridge 21 includes an analogue switch SW3, an analogue switch SW4, an analogue switch SW5, and an analogue switch SW6. The coil includes a coil Coil1 and a coil Coil2.

The sensor tube section A of the electromagnetic water meter is configured to acquire an induced electromotive force.

Specifically, referring to FIG. 3, measured induced voltage signals are commonly only in millivolt to microvolt level, and therefore, to improve the common-mode rejection ratio, in one embodiment, the measurement circuit 12 further includes:
an instrument operation amplifier U1, connected to the second analogue switch 121 and configured to amplify the induced voltage signals and output amplified induced voltage signals;
a signal modulation circuit SC (Signal modulation Circuit), connected to the instrument operation amplifier U1 and configured to perform signal modulation processing on the amplified induced voltage signals and output modulated induced voltage signals, where the signal modulation circuit SC may be implemented by using a signal modulation chip or the like, which is not specifically limited herein;
a band-pass filter BF (Band Filter), connected to the signal modulation circuit SC and configured to sample the modulated induced voltage signals and output induced voltage signal in a specific band, where the band-pass filter BF may be implemented by using a band-pass filter chip or the like, which is not specifically limited herein; and
an analogue-to-digital converter ADC (Analog-to-Digital converter), connected to the band-pass filter BF and configured to perform analogue-to-digital conversion processing on the induced voltage signals in the specific band and output the digital signals. The analogue-to-digital converter ADC may be implemented by using an analogue-to-digital conversion chip or the like, which is not specifically limited herein.

For easy understanding by users, the electromagnetic water meter converter of this application is described with reference to FIG. 2, FIG. 3, and FIG. 4. A normal measurement mode is as follows: The main control module 13 controls the analogue switch SW1 and the analogue switch SW2 through an IO port, so that electrodes e1 and e2 each are directly connected to a positive input end and a negative end of the instrument operation amplifier U1; the main control module 13 simultaneously switches the analogue switch SW7 and the analogue switch SW8 to a coil interface end ex1 and a coil interface end ex2; and when the analogue switch SW4 and the analogue switch SW5 are closed, the analogue switch SW3 and the analogue switch SW6 are opened, the excitation current is outputted from the constant current source PSU, passes through the analogue switch SW4 to the analogue switch SW8, enters the coil interface terminal ex2 of the coil Coil2, then enters the coil Coil1, passes through the analogue switch SW7 to the analogue switch SW5, and finally enters the ground GND. After this state is maintained for several seconds, the direction of the excitation current needs to be changed. The main control module 13 controls the analogue switch SW3 and the analogue switch SW6 to close, and the analogue switch SW4 and the analogue switch SW5 to open. The excitation current flows out from the constant current source PSU, passes through the analogue switch SW3 and then to the analogue switch SW7, enters the coil Coil1 and the coil Coil2, and enters the ground GND through the analogue switch SW8 and the analogue switch SW6. In this case, the analogue switch SW1 and the analogue switch SW2 are respectively connected to the electrode e1 and the electrode e2, and the instrument operation amplifier U1 continuously amplifies the induced voltage signals on the electrode e1 and the electrode e2, and the amplified induced voltage signals pass through the signal modulation circuit SC, then enter the band-pass filter BF, and finally enter the analogue-to-digital converter ADC, so that the analogue signals are converted into digital signals to enter the main control module 13.

When switching from the measurement mode to the self-calibration mode, the main control module 13 outputs high and low levels to switch the analogue switch SW1 and the analogue switch SW2 from the electrode e1 and the electrode e2 to the port E1 and the ground GND, respectively. At the same time, the analogue switch SW7 and the analogue switch SW8 on the excitation circuit 10 in FIG. 2 are also switched from the coil interface end ex1 and the coil interface end ex2 to a port EX1 and a port EX2. At this time, the excitation current flows into the calibration circuit 11 in FIG. 4, the voltage signal on the sampling resistor Rg2 is amplified and outputted to the digitally adjustable resistor DPOT chip, and the main control module 13 adjusts the output of DPOT according to the calibration flow point Q3, flow point Q2, and flow point Q1 successively through program control, and outputs the induced voltage signal corresponding to each preset flow rate to the port E1 of the measurement circuit 12 through a first-order passive low-pass filter 42. In this way, the induced voltage corresponding to the measurement of each flow point passes through the measurement circuit 12, undergoes amplification, signal modulation, filtering, analogue-to-digital conversion, and is finally sent to the main control module 13. The main control module 13 corrects the correction coefficient of the converter by using a preset calibration algorithm. The correction coefficient of the electromagnetic water meter converter can be corrected by those skilled in the art by combining the traditional calibration algorithm and the algorithm designed based on the average value of a plurality of flow points. Because the new correction coefficient is accurate, the calculated flow rate precision is accurate, thereby improving the calibration efficiency and reducing the production cost and time cost in mass production.

In some other embodiments, for the convenience of users, the main control module 13 includes a main control chip and a trigger control module (not shown), the main control chip being connected to the trigger control module.

The trigger control module is configured to control sending of a trigger signal. The trigger control module may control the sending of a trigger signal by using a button, or, the trigger control module may alternatively control the sending of a trigger signal by using a software program or algorithm of the electromagnetic water meter, that is, the sending of the trigger signal is automatically controlled by using a preset trigger condition. In this embodiment, the sending of a trigger signal is controlled by the trigger control module by selecting through a button or by using a program in the electromagnetic water meter converter automatically, thereby having strong flexibility and providing convenience for users. Certainly, in some other embodiments, the trigger control module may alternatively adopt a trigger chip to implement the sending of the trigger signal, which is not specifically limited herein.

The main control chip is configured to when the trigger signal is received, control the first analogue switch 101 and the second analogue switch 121 to switch to the measurement mode or the self-calibration mode and correct the correction coefficient according to the digital signals and the preset calibration algorithm. It can be understood that the main control chip is the main control module 13, which is not repeated herein.

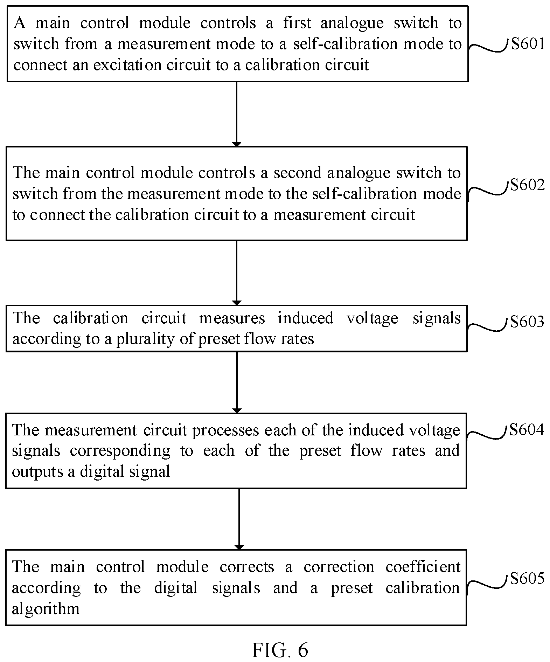

This application further provides a method for calibrating the electromagnetic water meter converter, applicable to the above-mentioned electromagnetic water meter converter. FIG. 6 is a flowchart of a method for calibrating the electromagnetic water meter converter according to an embodiment of this application. As shown in FIG. 6, the method includes the following steps.

Step S601. The main control module 13 controls a first analogue switch 101 to switch from a measurement mode to a self-calibration mode to connect an excitation circuit 10 to a calibration circuit 11.

Step S602. The main control module 13 controls a second analogue switch 121 to switch from the measurement mode to the self-calibration mode to connect the calibration circuit 11 to a measurement circuit 12.

Step S603. The calibration circuit 11 measures induced voltage signals according to a plurality of preset flow rates.

Step S604. The measurement circuit 12 processes each of the induced voltage signals corresponding to each of the preset flow rates and outputs a digital signal.

Step S605. The main control module 13 corrects a correction coefficient according to the digital signals and a preset calibration algorithm.

Through the above-mentioned step S601 to step S605, calibration of electromagnetic water meter converter can be implemented by those skilled in the art. Specifically, the main control module 13 may automatically control the first analogue switch 101 to switch from the measurement mode to the self-calibration mode to connect the excitation circuit 10 to the calibration circuit 11, the main control module 13 may automatically control the second analogue switch 121 to switch from the measurement mode to the self-calibration mode to connect the calibration circuit 11 to the measurement circuit 12, the calibration circuit 11 measures induced voltage signals according to a plurality of preset flow rates, the measurement circuit 12 processes each of the induced voltage signals corresponding to each of the preset flow rates and outputs a digital signal, and the main control module 13 corrects the correction coefficient according to the digital signals and a preset calibration algorithm. The calibration process can be automatically completed without disassembling and assembling the whole meter or the electromagnetic water meter converter, without personnel participation, and without the need to return the primary meter and the secondary meter to the original factory or professional organization for real flow calibration. In this way, the production cost and time cost are reduced and the calibration efficiency is improved. In addition, to facilitate mass production, self-calibration can alternatively be performed by an upper computer or other devices in the production of electromagnetic water meter converters for those skilled in the art. Compared with the method of calibrating one by one by an external calibration apparatus, the calibration efficiency is improved, and the production cost and time are reduced. In addition, the calibrated elements may not be changed or deviated due to a change in the environment. In this way, not only the consistency of products is improved, but also the problems of loss of time and production cost for users caused by the low flow velocity accuracy calculated by the real flow calibration or separate calibration and the need to return to the original factory or professional organization for real flow calibration one by one in the related technologies are resolved.

The above-mentioned implementations are merely illustrative of several embodiments of this application and the description thereof is more specific and detailed but cannot, therefore, be construed as limiting the scope of the invention patent. It should be noted that several modifications may be made by those of ordinary skill in the art without departing from the concept of this application, all of which fall within the scope of protection of this application. Therefore, the scope of protection of the patent of this application shall be subject to the appended claims.

## Claims

1. An electromagnetic water meter converter, comprising:
an excitation circuit (10), comprising a first analogue switch (101) configured to switch to a measurement mode or a self-calibration mode;
a calibration circuit (11) configured to measure induced voltage signals according to a plurality of preset flow rates;
a measurement circuit (12) configured to process each of the induced voltage signals corresponding to each of the preset flow rates and output a digital signal, the measurement circuit comprising a second analogue switch (121) configured to switch the measurement mode or the self-calibration mode; and
a main control module (13) configured to control the first analogue switch and the second analogue switch to switch to the measurement mode or the self-calibration mode, and correct a correction coefficient according to the digital signals and a preset calibration algorithm, wherein when the first analogue switch switches to the self-calibration mode, the excitation circuit is connected to the calibration circuit, and when the second analogue switch switches to the self-calibration mode, the calibration circuit is connected to the measurement circuit
**characterized in that**
the calibration circuit comprises a precision instrument operation amplifier (U2), a sampling resistor (Rg2) connected to an input end of the precision instrument operation amplifier, an adjustable voltage divider (41) connected to an output end of the precision instrument operation amplifier, and a low-pass filter (42) connected to the adjustable voltage divider;
the precision instrument operation amplifier is configured to acquire and amplify a voltage between two ends of the sampling resistor and output an amplified voltage signal;
the adjustable voltage divider is configured to divide the amplified voltage signal according to the plurality of preset flow rates and output voltage-divided voltage signals; and
the low-pass filter is configured to filter out a high-frequency signal from the voltage-divided voltage signals to obtain the induced voltage signals.

2. The electromagnetic water meter converter according to claim 1, wherein the calibration circuit further comprises a first inductor and a second inductor, and when the first analogue switch switches to the self-calibration mode, the excitation circuit, the first inductor, the sampling resistor, and the second inductor form a closed loop.

3. The electromagnetic water meter converter according to claim 1, wherein the adjustable voltage divider is a digitally adjustable resistor or a digital-to-analogue conversion chip.

4. The electromagnetic water meter converter according to claim 1, wherein the adjustable voltage divider comprises a micro control unit, a plurality of third analogue switches, and a network of precision voltage dividing resistors, wherein the micro control unit is configured to control any of the third analogue switches to close, to connect a corresponding voltage dividing resistor to the adjustable voltage divider.

5. The electromagnetic water meter converter according to claim 1, wherein the low-pass filter comprises a first resistor and a first capacitor, a first end of the first resistor is connected to the adjustable voltage divider, and a second end of the first resistor is connected to ground via the first capacitor.

6. The electromagnetic water meter converter according to claim 1, wherein the excitation circuit further comprises a constant current source, a switching bridge, a coil, and a sensor tube section of an electromagnetic water meter;
the constant current source is configured to output an excitation current;
a controlled port of the switch bridge is connected to the main control module, the switch bridge is configured to change a direction of the excitation current based on a switching control instruction of the main control module, and when being conducted, the constant current source, the switch bridge, the coil, and the ground form an excitation loop; and
the sensor tube section of the electromagnetic water meter is configured to acquire an induced electromotive force.

7. The electromagnetic water meter converter according to claim 1, wherein the measurement circuit further comprises:
an instrument operation amplifier, connected to the second analogue switch and configured to amplify the induced voltage signals and output amplified induced voltage signals;
a signal modulation circuit, connected to the instrument operation amplifier and configured to perform signal modulation processing on the amplified induced voltage signals and output modulated induced voltage signals;
a band-pass filter, connected to the signal modulation circuit and configured to sample the modulated induced voltage signals and output induced voltage signal in a specific band; and
an analogue-to-digital converter, connected to the band-pass filter and configured to perform analogue-to-digital conversion processing on the induced voltage signals in the specific band and output the digital signals.

8. The electromagnetic water meter converter according to claim 1, wherein the main control module comprises a main control chip and a trigger control module, the main control chip being connected to the trigger control module;
the trigger control module is configured to control sending of a trigger signal; and
the main control chip is configured to when the trigger signal is received, control the first analogue switch and the second analogue switch to switch to the measurement mode or the self-calibration mode and correct the correction coefficient according to the digital signals and the preset calibration algorithm.

9. A method for calibrating an electromagnetic water meter converter according to any of claims 1 to 8, wherein the method comprises:
controlling, by the main control module, the first analogue switch to switch from the measurement mode to the self-calibration mode to connect the excitation circuit to the calibration circuit;
controlling, by the main control module, the second analogue switch to switch from the measurement mode to the self-calibration mode to connect the calibration circuit to the measurement circuit;
measuring, by the calibration circuit, induced voltage signals according to a plurality of preset flow rates;
processing, by the measurement circuit, each of the induced voltage signals corresponding to each of the preset flow rates and outputting a digital signal; and
correcting, by the main control module, a correction coefficient according to the digital signals and a preset calibration algorithm.

## Patentansprüche

1. Elektromagnetischer-Wasserzähler-Wandler, aufweisend:
einen Erregungsschaltkreis (10), welcher einen ersten analogen Schalter (101) aufweist, welcher konfiguriert ist, um in einen Messungsmodus oder einen Selbstkalibrierungsmodus zu schalten;
einen Kalibrierungsschaltkreis (11), welcher konfiguriert ist, um Induzierte-Spannung-Signale gemäß mehreren vorgegebenen Durchflussraten zu messen;
einen Messungsschaltkreis (12), welcher konfiguriert ist, um jedes von den Induzierte-Spannung-Signalen, welche mit jeder von den vorgegebenen Durchflussraten korrespondieren, zu verarbeiten und ein digitales Signal auszugeben, wobei der Messungsschaltkreis einen zweiten analogen Schalter (121) aufweist, welcher konfiguriert ist, um den Messungsmodus oder den Selbstkalibrierungsmodus einzuschalten; und
ein Hauptsteuermodul (13), welches konfiguriert ist, um den ersten analogen Schalter und den zweiten analogen Schalter zu steuern, um in den Messungsmodus oder den Selbstkalibrierungsmodus zu schalten, und einen Korrekturkoeffizienten gemäß den digitalen Signalen und einem vorgegebenen Kalibrierungsalgorithmus zu korrigieren, wobei, wenn der erste analoge Schalter in den Selbstkalibrierungsmodus schaltet, der Erregungsschaltkreis mit dem Kalibrierungsschaltkreis verbunden ist, und, wenn der zweite analoge Schalter in den Selbstkalibrierungsmodus schaltet, der Kalibrierungsschaltkreis mit dem Messungsschaltkreis verbunden ist;
**dadurch gekennzeichnet, dass**:
der Kalibrierungsschaltkreis einen Präzisionsinstrumentenbetriebsverstärker (U2), einen Abtastwiderstand (Rg2), welcher mit einem Eingangsende des Präzisionsinstrumentenbetriebsverstärkers verbunden ist, einen einstellbaren Spannungsteiler (41), welcher mit einem Ausgangsende des Präzisionsinstrumentenbetriebsverstärkers verbunden ist, und einen Tiefpassfilter (42) aufweist, welcher mit dem einstellbaren Spannungsteiler verbunden ist;
der Präzisionsinstrumentenbetriebsverstärker konfiguriert ist, um eine Spannung zwischen zwei Enden des Abtastwiderstandes zu erlangen sowie zu verstärken und ein Verstärkte-Spannung-Signal auszugeben;
der einstellbare Spannungsteiler konfiguriert ist, um das Verstärkte-Spannung-Signal gemäß den mehreren vorgegebenen Durchflussraten zu teilen und Spannungsgeteilte-Spannung-Signale auszugeben; und
der Tiefpassfilter konfiguriert ist, um ein Hochfrequenzsignal aus den Spannungsgeteilte-Spannung-Signalen herauszufiltern, um die Induzierte-Spannung-Signale zu erlangen.

2. Elektromagnetischer-Wasserzähler-Wandler gemäß Anspruch 1, wobei: der Kalibrierungsschaltkreis ferner eine erste Induktivität-Vorrichtung und eine zweite Induktivität-Vorrichtung aufweist, und, wenn der erste analoge Schalter zu dem Selbstkalibrierungsmodus schaltet, der Erregungsschaltkreis, die erste Induktivität-Vorrichtung, der Abtastwiderstand und die zweite Induktivität-Vorrichtung einen geschlossenen Kreislauf bilden.

3. Elektromagnetischer-Wasserzähler-Wandler gemäß Anspruch 1, wobei der einstellbare Spannungsteiler ein digital einstellbarer Widerstand oder ein Digital-zu-Analog-Konvertierung-Chip ist.

4. Elektromagnetischer-Wasserzähler-Wandler gemäß Anspruch 1, wobei der einstellbare Spannungsteiler eine Mikrosteuereinheit, mehrere dritte analoge Schalter und ein Netzwerk von Präzisionsspannungsteilungswiderständen aufweist, wobei die Mikrosteuereinheit konfiguriert ist, um jedweden von den dritten analogen Schaltern zu steuern, um sich zu schließen, um einen korrespondierenden Spannungsteilungswiderstand mit dem einstellbaren Spannungsteiler zu verbinden.

5. Elektromagnetischer-Wasserzähler-Wandler gemäß Anspruch 1, wobei der Tiefpassfilter einen ersten Widerstand und einen ersten Kondensator aufweist, wobei ein erstes Ende von dem ersten Widerstand mit dem einstellbaren Spannungsteiler verbunden ist, und wobei ein zweites Ende von dem ersten Widerstand über den ersten Kondensator mit Masse verbunden ist.

6. Elektromagnetischer-Wasserzähler-Wandler gemäß Anspruch 1, wobei der Erregungsschaltkreis ferner eine Konstanter-Strom-Quelle, eine Schaltbrücke, eine Spule und einen Sensorröhre-Abschnitt eines elektromagnetischen Wasserzählers aufweist;
wobei die Konstanter-Strom-Quelle konfiguriert ist, um einen Erregungsstrom auszugeben;
wobei ein gesteuerter Anschluss der Schaltbrücke mit dem Hauptsteuermodul verbunden ist, wobei die Schaltbrücke konfiguriert ist, um eine Richtung des Erregungsstroms basierend auf einem Schaltsteuerbefehl des Hauptsteuermoduls zu ändern, und wobei, wenn In-Betrieb-Genommen, die Konstanter-Strom-Quelle, die Schaltbrücke, die Spule und die Masse einen Erregungskreislauf bilden; und
wobei der Sensorröhre-Abschnitt des elektromagnetischen Wasserzählers konfiguriert ist, um eine induzierte elektromotorische Kraft zu erlangen.

7. Elektromagnetischer-Wasserzähler-Wandler gemäß Anspruch 1, wobei der Messungsschaltkreis ferner aufweist:
einen Instrumentenbetriebsverstärker, welcher mit dem zweiten analogen Schalter verbunden ist und konfiguriert ist, um die Induzierte-Spannung-Signale zu verstärken sowie Verstärkte-Induzierte-Spannung-Signale auszugeben;
einen Signalmodulationsschaltkreis, welcher mit dem Präzisionsinstrumentenbetriebsverstärker verbunden ist und konfiguriert ist, um ein Signalmodulationsverarbeiten an den Verstärkte-Induzierte-Spannung-Signalen durchzuführen und Modulierte-Induzierte-Spannung-Signale auszugeben;
einen Bandpassfilter, welcher mit dem Signalmodulationsschaltkreis verbunden ist und konfiguriert ist, um die Modulierte-Induzierte-Spannung-Signale abzutasten und das Induzierte-Spannung-Signal in einem spezifischen Band auszugeben; und
einen Analog-zu-Digital-Wandler, welcher mit dem Bandpassfilter verbunden ist und konfiguriert ist, um ein Analog-zu-Digital-Wandlung-Verarbeiten an den Induzierte-Spannung-Signalen in dem spezifischen Band durchzuführen und die digitalen Signale auszugeben.

8. Elektromagnetischer-Wasserzähler-Wandler gemäß Anspruch 1, wobei das Hauptsteuermodul einen Hauptsteuerchip und ein Trigger-Steuermodul aufweist, wobei der Hauptsteuerchip mit dem Trigger-Steuermodul verbunden ist;
wobei das Trigger-Steuermodul konfiguriert ist, um ein Senden eines Trigger-Signals zu steuern; und
wobei der Hauptsteuerchip konfiguriert ist, um, wenn das Trigger-Signal empfangen wird, den ersten analogen Schalter und den zweiten analogen Schalter zu steuern, um in den Messungsmodus oder den Selbstkalibrierungsmodus zu schalten, und den Korrekturkoeffizienten gemäß den digitalen Signalen und dem vorgegebenen Kalibrierungsalgorithmus zu korrigieren.

9. Verfahren zum Kalibrieren eines Elektromagnetischer-Wasserzähler-Wandlers gemäß einem der Ansprüche 1 bis 8, wobei das Verfahren aufweist:
Steuern, mittels des Hauptsteuermoduls, des ersten analogen Schalters, um von dem Messungsmodus aus zu dem Selbstkalibrierungsmodus zu schalten, um den Erregungsschaltkreis mit dem Kalibrierungsschaltkreis zu verbinden;
Steuern, mittels des Hauptsteuermoduls, des zweiten analogen Schalters, um von dem Messungsmodus aus zu dem Selbstkalibrierungsmodus zu schalten, um den Kalibrierungsschaltkreis mit dem Messungsschaltkreis zu verbinden;
Messen, mittels des Kalibrierungsschaltkreises, von Induzierte-Spannung-Signalen gemäß mehreren vorgegebenen Durchflussraten;
Verarbeiten, mittels des Messungsschaltkreises, jedes von den Induzierte-Spannung-Signalen, welche mit jeder von den vorgegebenen Durchflussraten korrespondieren, und Ausgeben eines digitalen Signals; und
Korrigieren, mittels des Hauptsteuermoduls, eines Korrekturkoeffizienten gemäß den digitalen Signalen und einem vorgegebenen Kalibrierungsalgorithmus.

## Revendications

1. Convertisseur de compteur d'eau électromagnétique, comprenant :
un circuit d'excitation (10), comprenant un premier commutateur analogique (101) configuré pour commuter à un mode de mesure ou un mode d'auto-étalonnage ;
un circuit d'étalonnage (11) configuré pour mesurer des signaux de tension induite selon une pluralité de débits prédéfinis ;
un circuit de mesure (12) configuré pour traiter chacun des signaux de tension induite correspondant à chacun des débits prédéfinis et émettre un signal numérique, le circuit de mesure comprenant un deuxième commutateur analogique (121) configuré pour activer le mode de mesure ou le mode d'auto-étalonnage ; et
un module de commande principal (13) configuré pour commander le premier commutateur analogique et le deuxième commutateur analogique pour commuter au mode de mesure ou au mode d'auto-étalonnage, et corriger un coefficient de correction en fonction des signaux numériques et d'un algorithme d'étalonnage prédéfini, dans lequel, lorsque le premier commutateur analogique commute au mode d'auto-étalonnage, le circuit d'excitation est connecté au circuit d'étalonnage, et lorsque le deuxième commutateur analogique commute au mode d'auto-étalonnage, le circuit d'étalonnage est connecté au circuit de mesure ;
**caractérisé en ce que**
le circuit d'étalonnage comprend un amplificateur d'opération d'instrument de précision (U2), une résistance d'échantillonnage (Rg2) connectée à une extrémité d'entrée de l'amplificateur d'opération d'instrument de précision, un diviseur de tension réglable (41) connecté à une extrémité de sortie de l'amplificateur d'opération d'instrument de précision, et un filtre passe-bas (42) connecté au diviseur de tension réglable ;
l'amplificateur d'opération d'instrument de précision est configuré pour acquérir et amplifier une tension entre deux extrémités de la résistance d'échantillonnage et pour émettre un signal de tension amplifié ;
le diviseur de tension réglable est configuré pour diviser le signal de tension amplifié en fonction de la pluralité de débits prédéfinis et pour délivrer émettre des signaux de tension divisés en tension ; et
le filtre passe-bas est configuré pour filtrer un signal haute fréquence à partir des signaux de tension divisés en tension afin d'obtenir les signaux de tension induite.

2. Convertisseur de compteur d'eau électromagnétique selon la revendication 1, dans lequel le circuit d'étalonnage comprend en outre une première inductance et une deuxième inductance, et lorsque le premier commutateur analogique commute au mode d'auto-étalonnage, le circuit d'excitation, la première inductance, la résistance d'échantillonnage et la deuxième inductance forment une boucle fermée.

3. Convertisseur de compteur d'eau électromagnétique selon la revendication 1, dans lequel le diviseur de tension réglable est une résistance réglable numériquement ou une puce de conversion numérique-analogique.

4. Convertisseur de compteur d'eau électromagnétique selon la revendication 1, dans lequel le diviseur de tension réglable comprend une micro-unité de commande, une pluralité de troisièmes commutateurs analogiques et un réseau de résistances de division de tension de précision, dans lequel la micro-unité de commande est configurée pour commander la fermeture de l'un quelconque des troisièmes commutateurs analogiques, pour connecter une résistance de division de tension correspondante au diviseur de tension réglable.

5. Convertisseur de compteur d'eau électromagnétique selon la revendication 1, dans lequel le filtre passe-bas comprend une première résistance et un premier condensateur, une première extrémité de la première résistance est connectée au diviseur de tension réglable, et une deuxième extrémité de la première résistance est connectée à la masse via le premier condensateur.

6. Convertisseur de compteur d'eau électromagnétique selon la revendication 1, dans lequel le circuit d'excitation comprend en outre une source de courant constant, un pont de commutation, une bobine et une section de tube capteur d'un compteur d'eau électromagnétique ;
la source de courant constant est configurée pour émettre un courant d'excitation ;
un terminal contrôlé du pont de commutation est connecté au module de commande principal, le pont de commutation est configuré pour changer une direction du courant d'excitation en fonction d'une instruction de commande de commutation du module de commande principal, et lorsqu'ils sont conduits, la source de courant constant, le pont de commutation, la bobine et la masse forment une boucle d'excitation ; et
la section de tube de capteur du compteur d'eau électromagnétique est configurée pour acquérir une force électromotrice induite.

7. Convertisseur de compteur d'eau électromagnétique selon la revendication 1, dans lequel le circuit de mesure comprend en outre :
un amplificateur d'opération d'instrument, connecté au deuxième commutateur analogique et configuré pour amplifier les signaux de tension induite et pour émettre des signaux de tension induite amplifiés ;
un circuit de modulation de signal, connecté à l'amplificateur d'opération d'instrument et configuré pour effectuer un traitement de modulation de signal sur les signaux de tension induite amplifiés et pour émettre des signaux de tension induite modulés ;
un filtre passe-bande, connecté au circuit de modulation de signal et configuré pour échantillonner les signaux de tension induite modulés et pour émettre un signal de tension induite dans une bande spécifique ; et
un convertisseur analogique-numérique, connecté au filtre passe-bande et configuré pour effectuer un traitement de conversion analogique-numérique sur les signaux de tension induite dans la bande spécifique et pour émettre les signaux numériques.

8. Convertisseur de compteur d'eau électromagnétique selon la revendication 1, dans lequel le module de commande principal comprend une puce de commande principale et un module de commande de déclenchement, la puce de commande principale étant connectée au module de commande de déclenchement ;
le module de commande de déclenchement est configuré pour commander l'envoi d'un signal de déclenchement ; et
la puce de commande principale est configurée pour, lorsque le signal de déclenchement est reçu, commander le premier commutateur analogique et le deuxième commutateur analogique pour commuter au mode de mesure ou au mode d'auto-étalonnage et corriger le coefficient de correction en fonction des signaux numériques et de l'algorithme d'étalonnage prédéfini.

9. Procédé d'étalonnage d'un convertisseur de compteur d'eau électromagnétique selon l'une quelconque des revendications 1 à 8, dans lequel le procédé comprend :
la commande, par le module de commande principal, du premier commutateur analogique pour commuter du mode de mesure au mode d'auto-étalonnage afin de connecter le circuit d'excitation au circuit d'étalonnage ;
la commande, par le module de commande principal, du deuxième commutateur analogique pour commuter du mode de mesure au mode d'auto-étalonnage afin de connecter le circuit d'étalonnage au circuit de mesure ;
la mesure, par le circuit d'étalonnage, de signaux de tension induite en fonction d'une pluralité de débits prédéfinis ;
le traitement, par le circuit de mesure, de chacun des signaux de tension induite correspondant à chacun des débits prédéfinis et l'émission d'un signal numérique ; et
la correction, par le module de commande principal, d'un coefficient de correction en fonction des signaux numériques et d'un algorithme d'étalonnage prédéfini.
